(19) **Europäisches Patentamt / European Patent Office / Office européen des brevets**

(11) **EP 3 214 577 A1**

(12) **EUROPEAN PATENT APPLICATION**
published in accordance with Art. 153(4) EPC

(43) Date of publication:
06.09.2017 Bulletin 2017/36

(51) Int Cl.:
*G06K 9/20* (2006.01)

(21) Application number: 14904976.9

(22) Date of filing: 13.12.2014

(86) International application number:
PCT/CN2014/093767

(87) International publication number:
WO 2016/065701 (06.05.2016 Gazette 2016/18)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.10.2014 CN 201410581671

(71) Applicant: Shenzhen TCL Digital Technology Ltd.
Shenzhen City, Guangdong 518000 (CN)

(72) Inventors:
• YANG, Jie
Shenzhen
Guangdong 518052 (CN)
• YAN, Yegang
Shenzhen
Guangdong 518052 (CN)

(74) Representative: Kuhnen & Wacker
Patent- und Rechtsanwaltsbüro
Prinz-Ludwig-Straße 40A
85354 Freising (DE)

(54) **IMAGE TEXT RECOGNITION METHOD AND DEVICE**

(57) A method, an apparatus for recognizing characters in an image are disclosed, comprising: processing binarization of the image to transform into a corresponding matrix; analyzing features in each of a plurality of adjacent parallel lines to obtain a character matrix value in said matrix; segmenting the image based on the character matrix value in said matrix to form character subblocks in the image; segmenting the remaining image from said character subblocks to get character information in said character subblocks and recognizing character information. An apparatus for recognizing characters in an image is disclosed in present disclosure.

```
                ┌─────────────────────────────────────────┐
                │ Processing binarazation of the image to  │──⌒ S10
                │      transform into a corresponding       │
                │               matrix                      │
                └─────────────────────────────────────────┘
                                    │
                                    ▼
                ┌─────────────────────────────────────────┐
                │ Analyzing features in each of a plurality│──⌒ S20
                │ of adjacent parallel lines to obtain     │
                │ character matrix values in said matrix   │
                └─────────────────────────────────────────┘
                                    │
                                    ▼
                ┌─────────────────────────────────────────┐
                │ Segmenting the image based on the        │──⌒ S30
                │ character matrix values in said matrix   │
                │ to form character subblocks              │
                └─────────────────────────────────────────┘
                                    │
                                    ▼
                ┌─────────────────────────────────────────┐
                │ Segmenting the remaining image to get    │──⌒ S40
                │ character information in said character   │
                │ subblocks and recognizing character      │
                │ information                              │
                └─────────────────────────────────────────┘
```

FIG. 1

EP 3 214 577 A1

## Description

### FIELD OF THE INVENTION

The present disclosure relates to the field of image recognition technologies, and in particular, to a method and an apparatus for recognizing characters in an image.

### BACKGROUND OF THE INVENTION

In the prior art, the technology of recognizing characters in an image is realized by a simple method of image segmentation, which cannot segment the image according to features of characters in the image during autonegotiation, therefore the accuracy of recognizing characters in an image is very low and not applicable to reality.

### SUMMARY OF THE INVENTION

The present disclosure aims to solve the problem of low accuracy in recognizing characters in an image, by the conventional method for recognizing characters in the image.

In order to solve the problem, the present disclosure provides a method for recognizing characters in an image including:

processing binarization of the image to transform into a corresponding matrix;
analyzing features in each of a plurality of adjacent parallel lines to obtain character matrix values in said matrix;
segmenting the image based on the character matrix values in said matrix to form character subblocks; and
segmenting the remaining image to get character information in said character subblocks and recognizing character information.

Preferably, the character matrix values includes a row width, a column width and a character size of the character matrix.

Preferably, the step of analyzing features in each of a plurality of adjacent parallel lines to obtain character matrix values in said matrix further includes:

(1) setting a character in said matrix for a first pixel;
(2) setting a background in said matrix for a second pixel;
(3) collecting the second pixels in each row to form an array;
(4) obtaining a row subscript when a number in the array is bigger than a preset reference value;
(5) obtaining a plurality of rows of numbers in the array bigger than a preset reference value if the plurality of rows meet a preset condition, in which a distance between every two of the row subscripts in a plurality of rows is a row width parameter;
(6) collecting several row width parameters in the array;
(7) obtaining an average value of several row width parameters;
(8) obtaining the row width parameter of the array;
(9) obtaining the column width parameters based on the row width parameters of the array; and
(10) obtaining the character size parameter of the array based on the column width parameters and row width parameters.

Preferably, the step of obtaining the row subscripts if each number in the array is bigger than a preset reference value, in which if corresponding rows to row subscripts meet a preset condition, a distance between every two of the row subscripts is a row width parameter, further including:

obtaining a first row combination if at least two consecutive numbers in the array are bigger than the preset reference value, obtaining a second row combination if at least two consecutive numbers in the array are bigger than the preset reference value, a distance between the first row subscripts of the first row combination and the second row subscripts of the second row combination is a row width parameter.

Preferably, the step of segmenting the remaining image to get character information in the character subblocks and recognizing character information is described hereinafter:

based on preset clustering algorithm, segmenting the remaining image to get character information in the character subblocks; comparing character information with a preset character database; recognizing the character based on the compared results.

Preferably, before the step of analyzing features in each of a plurality of adjacent parallel lines to obtain character matrix values in said matrix, an embodiment of the present disclosure further includes:

by an image registration function in a matrix lab, selecting several pairs of matching points between the image and preset reference image, and registering of the image based on several pairs of matching points, then an image registration parameter is obtained;
based on the image registration parameter, transforming any coordinate values in said matrix to form a transformed matrix coordinates.

Further, in order to realize above mentioned aim, the present disclosure further discloses an apparatus for recognizing characters in an image, including:

a binary module, is configured for processing binarazation of the image to transform into a corresponding matrix;
an analysis module, is configured for analyzing features in each of a plurality of adjacent parallel lines to obtain character matrix values in said matrix;
a segmentation module, is configured for segmenting the image based on character matrix values in said matrix to form character subblocks; and
a recognition module, is configured for segmenting the remaining image to get character information in the character subblocks.

Preferably, character matrix values include a row width, a column width and a character size of the character matrix.

Preferably, the analysis module includes:

an array obtaining unit, is configured for setting a character in said matrix for a first pixel and setting a background in said matrix for a second pixel, collecting the second pixels in each row, to form an array;
a row width parameter obtaining unit, is configured for obtaining a row subscript if a number in the array is bigger than a preset reference value, obtaining a plurality of rows of numbers in the array bigger than a preset reference value if the plurality of rows meet a preset condition, in which a distance between every two of the row subscripts in a plurality of rows is a row width parameter; collecting several row width parameters in the array; average value of the row width parameters is obtained, thus obtaining the row width parameter of the array;
a character size parameter obtaining unit, is configured for obtaining the character size parameter of the array based on the column width parameter and row width parameter of the array; the column width parameter of the array is obtained based on the row width parameter of the array.

Preferably, the row width parameter obtaining unit is also configured for:

obtaining a first row combination of at least two consecutive numbers in the array bigger than the preset reference value, obtaining a second row combination of at least two consecutive numbers in the array bigger than the preset reference value, a distance between the first row subscripts of the first row combination and the second row subscripts of the second row combination is a row width parameter.

Preferably, the recognition module is configured for: segmenting the remaining image to get character information in said character subblocks, segmenting the remaining image to get character information in the character subblocks based on preset clustering algorithm, comparing character information with a preset character database, and recognizing characters in the image based on the compared results.

Preferably, the apparatus of recognizing characters in an image further includes:

a registration module, is configured for, by the image registration function in the matrix lab, selecting several pairs of matching points between the image and preset reference image, and registering of the image based on several pairs of matching points, then the image registration parameter is obtained. Based on the image registration parameter, any coordinate values in said matrix are transformed to form a transformed matrix coordinates.

The present disclosure provides a method and an apparatus for recognizing characters in an image, by analyzing features in each of a plurality of adjacent parallel lines in said matrix, as a result, character matrix values are estimated.

Then, the image is segmented based on the character matrix values in said matrix to form character subblocks and then character subblocks are recognized. The image is segmented to get character information, recognizing character information according to estimated character matrix values during autonegotiation. Therefore the accuracy of segmenting is improved and the precision of recognizing characters in an image is improved.

## BRIEF DESCRIPTION OF THE DRAWINGS

FIG. 1 is a schematic flowchart of a method for recognizing characters in an image according to a first embodiment of the present disclosure;
FIG. 2 is a schematic flowchart illustrated for step S20 in FIG. 1;
FIG. 3 is a schematic flowchart of a second embodiment of recognizing characters in an image of the present disclosure;
FIG. 4 is a schematic diagram of functional modules according to the first embodiment of the present disclosure;
FIG. 5 is a schematic diagram of the analysis module 02 in FIG. 4;
FIG. 6 is a schematic diagram of functional modules of an apparatus for recognizing characters in an image.

There and other features, aspects, and advantages of disclosure will be apparent to those skilled in the art from the following detailed description of embodiments, taken together with the drawings and the claims that follow.

## DETAILED DESCRIPTION OF THE EMBODIMENTS

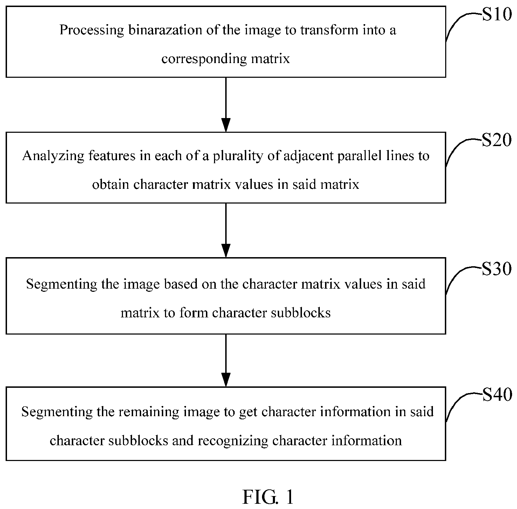

It should be understood that the specific embodiments described herein are merely used for describing the present disclosure, but are not intended to limit the present disclosure.
The present disclosure provides a method for recognizing characters in an image.
Referring to FIG. 1, FIG. 1 is a schematic flowchart of a method according to a first embodiment of the present disclosure.
In the first embodiment, a method for recognizing characters in an image includes:

step S10: processing binarization of the image to transform into a corresponding matrix, that means, process the image with binary code algorithm to form a corresponding one-dimension matrix, in order to analyze the image by analyzing the matrix directly;
step S20: analyzing features in each of a plurality of adjacent parallel lines to obtain character matrix values in said matrix.

By analyzing features in each of a plurality of adjacent parallel lines, as a result, character matrix values are estimated, that means, the character matrix values may be a row width, a column width, a character size of the character matrix and so on. In addition, different character matrix values may be gotten according to said different matrix in different images, so as to obtain corresponding character matrix values according to different character information in images during autonegotiation. According to embodiments of the present disclosure, the images for recognition may be the formats of jpg, bmp, png etc.. And there is no need of description herein.
In step S30, step S30 segments the image based on the character matrix values in said matrix to form character subblocks.
After obtaining the character matrix values, segmenting the image based on the character matrix values, several character subblocks may be formed. Due to segment the image based on the character matrix values that may reflect the character information in the image largely, the character subblocks may incorporate effective character information largely. The accuracy and rationality of segmenting is improved. The precision of recognizing characters in an image is improved as well.
In step S40, step S40 segments the remaining image to get character information in said character subblocks and recognizing character information.
Due to the binary image only has two pixels, a character pixel and a background pixel. Based on preset clustering algorithm, segmenting the remaining image in the character subblocks to get the character information, the character information is the character pixel. Getting rid of disturbance of the background pixels, and comparing the character pixels with a preset character database, of which may storage typical character information in advance. By comparing the similarity between the character information in the character subblocks formed by segmenting the images and the typical character information in the preset character database, the characters in the character subblocks are recognized, that is, the characters in the image is recognized.

According to an embodiment of the present disclosure, by analyzing features in each of a plurality of adjacent parallel lines, as a result, the related character matrix values are estimated, and then the image based on the related character matrix values in said matrix is segmented to form character subblocks, at this time, recognizing the character subblocks. The image is segmented to get character information and character information is recognized according to estimated character matrix values during autonegotiation, therefore, the accuracy of segmenting is improved and the precision of recognizing characters in an image is improved.

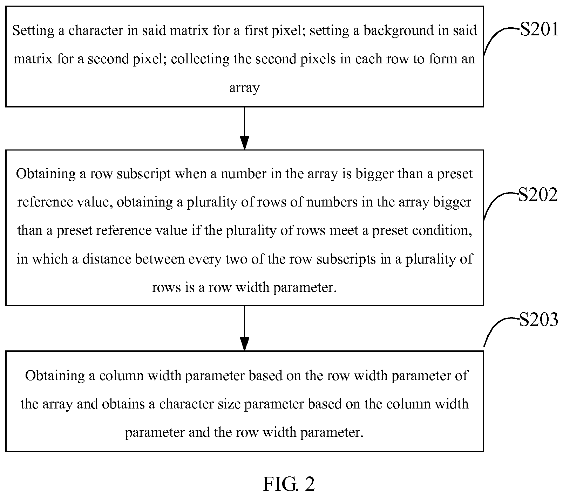

Specifically, as shown in FIG. 2, the step S20 may further include: step S201: (1) setting a character in said matrix for a first pixel; (2) setting a background in said matrix for a second pixel; (3) collecting the second pixels in each row to form an array.

After binary image transforming into a corresponding matrix, the character in said matrix is set as the first pixel and the background is set as the second pixel. For example, the first pixel is 0, the second pixel is 225. The second pixels, that are 225 in each row are collected to form an array $Num_{white}$, marked as $NUm_{white} = \llcorner num_1, num_2......num_n \lrcorner$, in which, $n$ is the number of the rows, $num_i$ represents the number the second pixel 225 in the row where the row subscript is $i$ . It needs to be mentioned, since in most images, the characters are black and the background is white, in the present disclosure, taking an example of the first pixel being a black pixel and the second pixel being a white pixel. Of course, the colors of the first pixel and second pixel are not limited in the present disclosure. Due to the single color (almost white) of the background, like between each lines of characters, the character rows have a great deal of white pixels even if there is high concentration of black pixels. The black pixels couldn't fill up the entire character rows. In the embodiment of the present disclosure, we may preferably choose collect the value of white pixels in each row; that is, the value of white pixels is regarded as a reference value. Consequently, distinguishing the character rows and blank rows will be more efficient.

In step S202, step S202 obtains a row subscript when a number in the array is bigger than a preset reference value, obtaining a plurality of rows of numbers in the array bigger than a preset reference value if the plurality of rows meet a preset condition, in which a distance between every two of the row subscripts in a plurality of rows is a row width parameter. Then several row width parameters in the array are collected, an average value of several row width parameters is obtained and the row width parameter of the array is obtained.

Theoretically, in the array $Num_{white}$, the maximum value of $num_i$ should be the number of columns in the array, $num_i$ indicates the number of columns in the matrix that are white, that is blank herein. However, in the practical application, due to the error in image processing, the numbers in each blank row are all the white pixel, 255. In order to add robustness in statistics, the reference value $p$ is preset as 85% of the number of columns m, that $is\ p = m * 85\%$, only if $num_i$ in the array is bigger than $p$, the row is a blank row. Consequently, the accuracy in statistics may be improved, minimizing disturbance of the error in the practical application.

If a number in the array is bigger than a preset reference value $p$, obtaining a row subscript i of row $num_i$. If the plurality of rows meet a preset condition, obtaining a plurality of rows of numbers in the array bigger than a preset reference value $p$, in which a distance between every two of the row subscripts of a plurality of rows is a row width parameter. In the embodiment, it is preferable to obtain a first row combination of at least two consecutive numbers in the array bigger than the preset reference value and to obtain a second row combination of at least two consecutive numbers in the array bigger than the preset reference value. A distance between the first row subscripts of the first row combination and the second row subscripts of the second row combination is a row width parameter. Then, the width of each character row between blank row combinations is exactly calculated. At this time, several row width parameters in the array are collected. An average value of the row width parameters needs to be calculated since there are differences in row width parameters, this is the row width parameter of the array.

Step S203 obtains a column width parameter based on the row width parameter of the array and obtains a character size parameter based on the column width parameter and the row width parameter.

Generally speaking, the characters in the image occupy spaces of squares, thus, the row width parameter of the array may be the column width parameter according to the embodiments of the present disclosure, so the character size parameter may be obtained based on the column width parameter and the row width parameter. Therefore, the character size parameter may reflect features of font sizes in different images. Of course, when the row width and column width of font sizes are different, the column width parameter may be obtained according to the same method of obtaining the row width parameter. It needs to be illustrated, even though punctuation in the image may influence the obtained character size in some extent, the image segmentation later mentioned has a fuzzy recognition ability to the segmented character subblocks which may be influenced by punctuation, also, the punctuation in each row is not exceeding 10%. Therefore, the punctuation in the image has very little influence on recognizing characters from an image of the present disclosure.

Furthermore, the clustering algorithm mentioned in step S40 may be k-means clustering algorithm. According to k-means clustering algorithm, segmenting the remaining image to get character information in said character subblocks includes:

randomly choose a character subblocks to process image segmentation; process a corresponding matrix of the character subblock of the image, transforming into a one-dimensional vector *VR*, and then randomly choose two dots *A* and *B* in the vector *VR* as initial cluster centers in clusters;

calculating the distance from any dot to the initial cluster centers, two dots A and *B* in the vector *VR* ; classifying dots in the vector *VR* into two parts based on the distances from dots to the initial cluster centers, that is, dots closer dot *A* belong to *A* part and dots closer to *dot B* belong to *B* part;

determining a new cluster center in each part, that means, determining the intermediate dot of *A* part as a new cluster center and determining the intermediate dot of *B* part as a new cluster center as well;

calculating the distance from any dot to new cluster centers; classifying dots in the vector *VR* into two parts based on the distance from dots to the new cluster centers; then determining the intermediate dots of two parts as two cluster centers once again.

In turn, until the cluster centers are determined as two certain dots, the circulation is stopped, ultimately dots in the vector *VR* may be divided into two parts. That means, segmenting the remaining image to get character information in said character subblocks as the character pixels

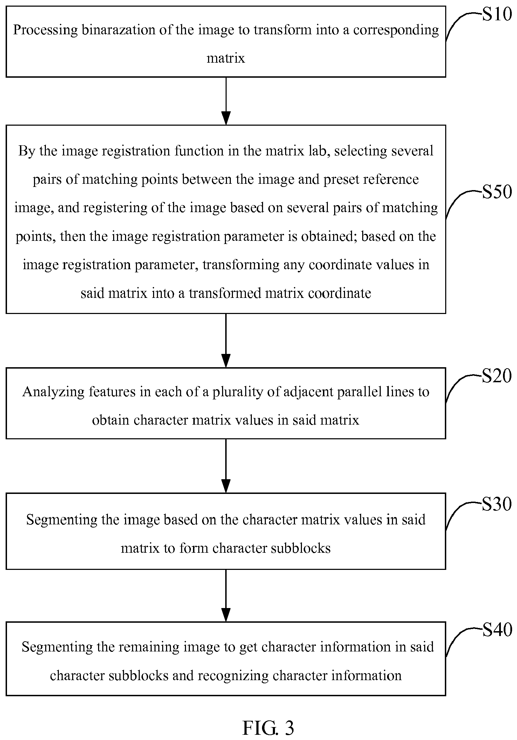

Referring to FIG. 3, FIG. 3 is a schematic flowchart of a second embodiment of recognizing characters in an image of the present disclosure.

In the second embodiment, before the step S20 further including:

the step S50, by the image registration functionin the matrix lab, selecting several pairs of matching points between the image and preset reference image, and registering of the image based on several pairs of matching points, then the image registration parameter is obtained. Based on the image registration parameter, any coordinate values are transformed in said matrix into a transformed matrix coordinate.

In the embodiment, after binarazation of the image to transform into a corresponding matrix, this one-dimensional matrix is marked as $I_{n*m}$, in which, *n* represents the number of rows and *m* represents the number of columns in the matrix. By the image registration function in the matrix lab ( Matlab), selecting several pairs of matching points between the image and preset reference image; obtaining the image registration parameter. Specifically, taking out the image registration function cpselect(input, base) and cp2tform(input,base), the vector [input] is a one-dimensional vector representing the image and [base] is a one-dimensional vector representing the preset reference image. By the function cpselect(input, base), selecting several pairs of matching points between the image and the preset reference image, stored in the vectors [input_points] and [base_points] respectively, then by the function cp2tform, setting registering parameter as 'linear conformal', therefore, the image registration parameter T may be obtained by the formula hereinafter:

$$T = \text{cp2tform}(\text{input\_points}, \text{base\_points}, \text{'linear conformal'})$$

after the image registration parameter T is obtained, transforming any coordinate values in said matrix into a transformed matrix coordinate based on the image registration parameter *T*. For example, if (*w,z*) is any coordinate values in said matrix $I_{n*m}$, the image registration parameter T works as a transforming parameter, based on the transforming parameter, performing the transforming process like translation, scaling, rotation and so on. Therefore, the transformed coordinate axis (*x,y*)=*T(w,z)* is obtained by the transforming process based on image registration parameter *T.*

In the present disclosure, before analyzing features in each of a plurality of adjacent parallel lines to obtain character matrix values in said matrix, registering of the image, which may be beneficial to the following process of character recognition where the image may be approximate to the preset reference image. At this time, analyzing features in each of a plurality of adjacent parallel lines may be more simple and accurate, so as to improve the accuracy of recognizing characters from the image.

The present disclosure also provides an apparatus for recognizing characters from the image.

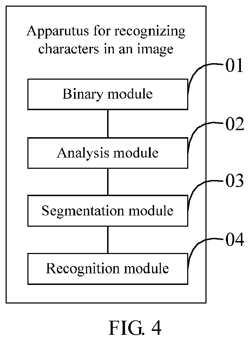

Referring to FIG. 4, FIG. 4 is a schematic diagram of functional modules according to the first embodiment of the present disclosure.

In the first embodiment, the apparatus for recognizing characters from the image including:

a binary module 01, is configured for processing binarazation of the image to transform into a corresponding matrix; after processing binarazation of the image, to get a corresponding matrix, which is beneficial to analyze the matrix directly instead of the image.

a analysis module 02, is configured for analyzing features in each of a plurality of adjacent parallel lines to obtain character matrix values in said matrix;

by analyzing features in each of a plurality of adjacent parallel lines to estimate the character matrix values such as a row width, a column width, a character size of the character matrix etc. So, different character matrix values may be obtained in correspondence with different image matrices, also obtaining character matrix values according to different character information in different images during autonegotiation.

In the embodiment, the images for recognition may be the formats of jpg, bmp, png ect. There are non-limiting herein.

A segmentation module 03, is configured for segmenting the image based on character matrix values in said matrix to form character subblocks.

After obtaining the character matrix values, the image is segmented based on the character matrix values, then several character subblocks may be formed. Due to segmenting the image based on the character matrix values, the character subblocks may incorporate effective character information largely. The accuracy and rationality of segmenting is improved the precision of recognizing characters in an image is improved as well.

A recognition module 04, is configured for segmenting the remaining image to get character information in the character subblocks and recognizing the character information.

Due to the binary image only has two pixels, a character pixel and a background pixel. Based on preset clustering algorithm, segmenting the remaining image in the character subblocks to get the character information, the character information is the character pixel. Getting rid of disturbance of the background pixels, and comparing the character pixels with a preset character database, of which may storage typical character information in advance. By comparing the similarity between the character information in the character subblocks formed by segmenting the images and the typical character information in the preset character database, the characters in the character subblocks are recognized, that is, the characters in the image is recognized.

In the embodiment, by analyzing features in each of a plurality of adjacent parallel lines, as a result, the related character matrix values are estimated, and then segmenting the image based on the related character matrix values in said matrix to form character subblocks, at this time, recognize the character subblocks. Due to the image is segmented to get character information and character information is recognized according to estimated character matrix values during autonegotiation, therefore, the accuracy of segmenting is improved and the precision of recognizing characters in an image is improved greatly.

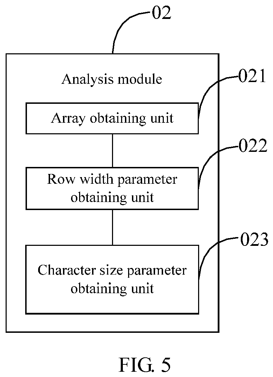

Specifically, as shown in FIG. 5, the analysis module 02 may include: an array obtaining unit 021, is configured for setting a character in said matrix for a first pixel and setting a background in said matrix for a second pixel, collecting the second pixels in each row, to form an array.

After binary image transforming into a corresponding matrix, the character in said matrix is set as the first pixel and the background is set as the second pixel. For example, the first pixel is 0, the second pixel is 225.

The second pixels, that is 225 in each row are collected to form an array $Num_{white}$, marked as $Num_{white}$ = ⌊$num_1, num_2......num_n$⌋, in which, n is the number of the rows, $num_i$ represents the number the second pixel 225 in the row where the row subscript is $i$. It needs to be mentioned, since in most images, the characters are black and the background is white, in the present disclosure, taking an example of the first pixel being a black pixel and the second pixel being a white pixel. Of course, the colors of the first pixel and second pixel are not limited in the present disclosure.

Due to the single color (almost white) of the background, like between each lines of characters, the character rows have a great deal of white pixels even if there is high concentration of black pixels. The black pixels couldn't fill up the entire character rows. In the embodiment of the present disclosure, we may preferably choose to collect the value of white pixels in each row, that is, the value of white pixels is regarded as a reference value. Consequently, distinguishing the character rows and blank rows will be more accurate and efficient.

A row width parameters obtaining unit 022 is configured for obtaining a row subscript if a number in the array is bigger than a preset reference value.A plurality of rows of numbers in the array are obtained bigger than a preset reference value if the plurality of rows meet a preset condition, in which a distance between every two of the row subscripts in a plurality of rows is a row width parameter; collecting several row width parameters in the array; average value of the row width parameters is obtained, thus obtaining the row width parameter of the array.

Theoretically, in the array $Num_{white}$, the maximum value of $num_i$ should be the number of columns in the array $m$, which means, every column in the array is blank, the same as white herein. However, in the practical application, due to the error in image processing, the numbers in each blank row are all the white pixel, 255.

In order to add robustness in statistics, the reference value $p$ is preset as 85% of the number of columns $m$, that is $p = m * 85\%$, only if $num_i$ in the array is bigger than $p$, the row is a blank row. Consequently, the accuracy in statistics may be improved, minimizing disturbance of the error in the practical application.

Obtaining a row subscript $i$ of row $num_i$ if a number in the array is bigger than a preset reference value $p$; obtaining a plurality of rows of numbers in the array bigger than a preset reference value $p$ if the plurality of rows meet a preset condition, in which a distance between every two of the row subscripts of a plurality of rows is a row width parameter. In the embodiment, preferably, obtaining a first row combination of at least two consecutive numbers in the array bigger than the preset reference value, obtaining a second row combination of at least two consecutive numbers in the array bigger than the preset reference value, a distance between the first row subscripts of the first row combination and the second row subscripts of the second row combination is a row width parameter. Then, exactly calculating the width of each character row between blank row combinations; collecting several row width parameters in the array; an average value of the row width parameters needs to be calculated since there are differences in row width parameters, this is the row width parameter of the array.

A character size parameter obtaining unit 023, is configured for obtaining the character size parameter of the array based on the column width parameter and row width parameter of the array; the column width parameter of the array is obtained based on the row width parameter of the array.

Generally speaking, the characters in the image occupy spaces of squares, thus, the row width parameter of the array may be the column width parameter according to the embodiments of the present disclosure, so the character size parameter may be obtained based on the column width parameter and the row width parameter. Therefore, the character size parameter may reflect features of font sizes in different images. Of course, when the row width and column width of font sizes are different, the column width parameter may be obtained according to the same method of obtaining the row width parameter. It needs to be illustrated, even though punctuation in the image may influence the obtained character size in some extent, the image segmentation later mentioned has a fuzzy recognition ability to the segmented character subblocks which may be influenced by punctuation, also, the punctuation in each row is not exceeding 10%. Therefore, the punctuation in the image has very little influence on recognizing characters from an image of the present disclosure.

Furthermore, the clustering algorithm preset by the above-mentioned recognition module 04 may be k-means clustering algorithm. According to k-means clustering algorithm, segmenting the remaining image to get character information in said character subblocks comprises:

randomly choose a character subblocks to process image segmentation; process a corresponding matrix of the character subblock of the image, transforming into a one-dimensional vector VR, and then randomly choose tow dots *A* and *B* in the vector *VR* as initial cluster centers in clusters;

calculating the distance from any dot to the initial cluster centers, two dots A and *B* in the vector *VR* ; classifying dots in the vector *VR* into two parts based on the distances from dots to the initial cluster centers, that is, dots closer dot *A* belong to *A* part and dots closer to dot *B* belong to *B* part;

determining a new cluster center in each part, that means, determining the intermediate dot of *A* part as a new cluster center and determining the intermediate dot of *B* part as a new cluster center as well;

calculating the distance from any dot to new cluster centers; classifying dots in the vector *VR* into two parts based on the distance from dots to the new cluster centers; then determining the intermediate dots of two parts as two cluster centers once again.

In turn, until the cluster centers are determined as two certain dots, the circulation is stopped, ultimately dots in the vector *VR* may be divided into two parts. That means, segmenting the remaining image to get character information in said character subblocks as the character pixels.

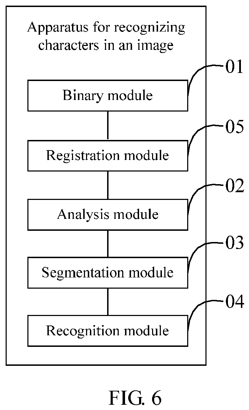

As shown in FIG. 6, FIG.6 is a schematic diagram of functional modules of an apparatus for recognizing characters in an image.

In the second embodiment, the apparatus for recognizing characters from an image further comprises: a registration module 05, is configured for, by the image registration function in the matrix lab, selecting several pairs of matching points between the image and preset reference image, and registering of the image based on several pairs of matching points, then the image registration parameter is obtained; based on the image registration parameter, transforming any coordinate values in said matrix into a transformed matrix coordinate.

In the embodiment, after binarazation of the image to transform into a corresponding matrix, this one-dimensional matrix is marked as $I_{n*m}$, in which, n represents the number of rows and m represents the number of columns in the matrix. By the image registration function in the matrix lab ( Matlab), selecting several pairs of matching points between the image and preset reference image; obtaining the image registration parameter. Specifically, taking out the image registration function cpselect(input, base) and cp2tform(input,base), the vector [input] is a one-dimensional vector representing the image and [base] is a one-dimensional vector representing the preset reference image. By the function cpselect(input,base), selecting several pairs of matching points between the image and the preset reference image, stored in the vectors [input_points]and [base_points] respectively, then by the function cp2tform, setting registering parameter as 'linear conformal', therefore, the image registration parameter T may be obtained by the formula hereinafter:

$$T = \text{cp2tform}(\text{input\_points}, \text{base\_points}, \text{'linear conformal'})$$

after the image registration parameter $T$ is obtained, transforming any coordinate values in said matrix into a transformed matrix coordinate based on the image registration parameter $T$. For example, if $(w,z)$ is any coordinate values in said matrix $I_{n*m}$, the image registration parameter $T$ works as a transforming parameter, based on the transforming parameter, performing the transforming process like translation, scaling, rotation and so on. Therefore, the transformed coordinate axis $(x,y)=T(w,z)$ is obtained by the transforming process based on image registration parameter $T$.

In the present disclosure, before analyzing features in each of a plurality of adjacent parallel lines to obtain character matrix values in said matrix, registering of the image, which may be beneficial to the following process of character recognition where the image may be approximate to the preset reference image. At this time, analyzing features in each of a plurality of adjacent parallel lines may be more simple and accurate, so as to improve the accuracy of recognizing characters from the image.

The sequence numbers of the above embodiments of the present disclosure are used merely for description, and do not represent the preference of the embodiments. According to the description of the foregoing embodiments, a person skilled in the art may clearly understand that the present disclosure may be implemented by software in addition to a necessary universal hardware platform or by hardware only. In most circumstances, the former is preferred. Based on such an understanding, the technical solution of the present disclosure essentially, or the part contributing to the prior art may be implemented in the form of a software product. The computer software product is stored in a storage medium (which may be ROM/RAM, a magnetic disk, an optical disk) and includes several instructions for instructing a computer device (which may be a personal computer, a server, a network device) to perform all or part of the steps of the methods provided in the embodiments of the present disclosure.

The foregoing descriptions are merely embodiments of the present disclosure, and are not intended to limit the scope of the present disclosure. An equivalent structural or equivalent process alternation made by using the content of the specification and drawings of the present disclosure, or an application of the content of the specification and drawings directly or indirectly to another related technical field, shall fall within the protection scope of the present disclosure.

**Claims**

1. A method for recognizing characters in an image comprising:

    processing binarization of the image to transform into a corresponding matrix;
    analyzing features in each of a plurality of adjacent parallel lines to obtain character matrix values in said matrix;
    segmenting the image based on the character matrix values in said matrix to form character subblocks;
    segmenting the remaining image to get character information in said character subblocks and recognizing character information.

2. The method for recognizing characters in an image of claim 1, wherein, the character matrix values comprises a row width, a column width and a character size of the character matrix.

3. The method for recognizing characters in an image of claim 1, wherein, analyzing features in each of a plurality of adjacent parallel lines to obtain character matrix values in said matrix, comprising:

    (1) setting a character in said matrix for a first pixel;
    (2) setting a background in said matrix for a second pixel;
    (3) collecting the second pixels in each row to form an array;
    (4) obtaining a row subscript when a number in the array is bigger than a preset reference value;
    (5) obtaining a plurality of rows of numbers in the array bigger than a preset reference value if the plurality of rows meet a preset condition, in which a distance between every two of the row subscripts in a plurality of rows is a row width parameter;
    (6) collecting several row width parameters in the array;
    (7) obtaining an average value of several row width parameters;
    (8) obtaining the row width parameter of the array;
    (9) obtaining a column width parameter based on the row width parameter of the array;
    (10) obtaining a character size parameter of the array based on the column width parameter and the row width parameter.

4. The method for recognizing characters in an image of claim 3, if each number in the array is bigger than a preset reference value, obtaining the row subscripts; if corresponding rows to row subscripts meet a preset condition, a distance between every two of the row subscripts works as a row width parameter, further comprising:

> obtaining a first row combination if at least two consecutive numbers in the array are bigger than the preset reference value, obtaining a second row combination if at least two consecutive numbers in the array are bigger than the preset reference value, a distance between the first row subscripts of the first row combination and the second row subscripts of the second row combination is a row width parameter.

5. The method for recognizing characters in an image of claim 1, wherein, segmenting the remaining image to get character information in the character subblocks and recognizing character information comprising:

> based on preset clustering algorithm, segmenting the remaining image to get the character information in the character subblocks; comparing the character information with a preset character database; recognizing the character based on the result of comparison.

6. The method for recognizing characters in an image of claim 1, wherein, before analyzing features in each of a plurality of adjacent parallel lines to obtain character matrix values in said matrix, further comprising:

> by the image registration function in the matrix lab, selecting several pairs of matching points between the image and preset reference image, and registering of the image based on several pairs of matching points, then the image registration parameter is obtained;
> based on the image registration parameter, transforming any coordinate values in said matrix into a transformed matrix coordinate.

7. The method for recognizing characters in an image of claim 2, wherein, before analyzing features in each of a plurality of adjacent parallel lines to obtain character matrix values in said matrix, further comprising:

> by the image registration function in the matrix lab, selecting several pairs of matching points between the image and preset reference image, and registering of the image based on several pairs of matching points, then the image registration parameter is obtained;
> based on the image registration parameter, transforming any coordinate values in said matrix to form a transformed matrix coordinates.

8. The method for recognizing characters in an image of claim 3, wherein, before analyzing features in each of a plurality of adjacent parallel lines to obtain character matrix values in said matrix, further comprising:

> by the image registration function in the matrix lab, selecting several pairs of matching points between the image and preset reference image, and registering of the image based on several pairs of matching points, then the image registration parameter is obtained;
> based on the image registration parameter, transforming any coordinate values in said matrix to form a transformed matrix coordinates.

9. The method for recognizing characters in an image of claim 4, before analyzing features in each of a plurality of adjacent parallel lines to obtain character matrix values in said matrix, further comprises:

> by the image registration function in the matrix lab, selecting several pairs of matching points between the image and preset reference image, and registering of the image based on several pairs of matching points, then the image registration parameter is obtained;
> based on the image registration parameter, transforming any coordinate values in said matrix to form a transformed matrix coordinates.

10. The method for recognizing characters in an image of claim 5, before analyzing features in each of a plurality of adjacent parallel lines to obtain character matrix values in said matrix, further comprises:

> by the image registration function in the matrix lab, selecting several pairs of matching points between the image and preset reference image, and registering of the image based on several pairs of matching points, then the image registration parameter is obtained;
> based on the image registration parameter, transforming any coordinate values in said matrix to form a transformed matrix coordinates.

**11.** An apparatus for recognizing characters in an image, comprising:

a binary module, is configured for processing binarization of the image to transform into a corresponding matrix;
a analysis module, is configured for analyzing features in each of a plurality of adjacent parallel lines to obtain character matrix values in said matrix;
a segmentation module, is configured for segmenting the image based on the character matrix values in said matrix to form character subblocks;
a recognition module, is configured for segmenting the remaining image to get character information in the character subblocks.

**12.** The apparatus for recognizing characters in an image of claim 11, wherein, the character matrix values comprises a row width, a column width, and a character size of the character matrix.

**13.** The apparatus for recognizing characters in an image of claim 11, wherein the analysis module comprises:

an array obtaining unit, is configured for setting a character in said matrix for a first pixel and setting a background in said matrix for a second pixel, collecting the second pixels in each row, to form an array;
a row width parameter obtaining unit, is configured for obtaining a row subscript if a number in the array is bigger than a preset reference value, obtaining a plurality of rows of numbers in the array bigger than a preset reference value if the plurality of rows meet a preset condition, in which a distance between every two of the row subscripts in a plurality of rows is a row width parameter; collecting several row width parameters in the array; average value of the row width parameters is obtained, thus obtaining the row width parameter of the array;
a character size parameter obtaining unit, is configured for obtaining the character size parameter of the array based on the column width parameter and row width parameter of the array; the column width parameter of the array is obtained based on the row width parameter of the array.

**14.** The apparatus for recognizing characters in an image of claim 13, wherein, the row width parameters obtaining unit is also configured for:

obtaining a first row combination of at least two consecutive numbers in the array bigger than the preset reference value, obtaining a second row combination of at least two consecutive numbers in the array bigger than the preset reference value, a distance between the first row subscripts of the first row combination and the second row subscripts of the second row combination is a row width parameter.

**15.** The apparatus for recognizing characters in an image of claim 11, wherein, the recognition module is configured for:

based on preset clustering algorithm, segmenting the remaining image to get character information in the character subblocks; comparing character information with a preset character database; recognizing characters based on the result of comparison.

**16.** The apparatus for recognizing characters in an image of claim 11, further comprising:

a registration module, is configured for, by the image registration function* in the matrix lab, selecting several pairs of matching points between the image and preset reference image, and registering of the image based on several pairs of matching points, then the image registration parameter is obtained;
based on the image registration parameter, transforming any coordinate values in said matrix to form a transformed matrix coordinates.

**17.** The apparatus for recognizing characters in an image of claim 12, further comprising:

a registration module, configured for, by the image registration function in the matrix lab, selecting several pairs of matching points between the image and preset reference image, and registering of the image based on several pairs of matching points, then the image registration parameter is obtained; based on the image registration parameter, transforming any coordinate values in said matrix to form a transformed matrix coordinates.

**18.** The apparatus for recognizing characters in an image of claim 13, further comprising:

a registration module, configured for, by the image registration function in the matrix lab; selecting several pairs of matching points between the image and preset reference image, and registering of the image based on several pairs of matching points, then the image registration parameter is obtained; based on the image registration parameter, transforming any coordinate values in said matrix to form a transformed matrix coordinates.

**19.** The apparatus for recognizing characters in an image of claim 14, further comprising:

a registration module, configured for, by the image registration function in the matrix lab; selecting several pairs of matching points between the image and preset reference image, and registering of the image based on several pairs of matching points, then the image registration parameter is obtained; based on the image registration parameter, transforming any coordinate values in said matrix to form a transformed matrix coordinates.

**20.** The apparatus for recognizing characters in an image of claim 15, further comprising:

a registration module, configured for, by the image registration function in the matrix lab, selecting several pairs of matching points between the image and preset reference image, and registering of the image based on several pairs of matching points, then the image registration parameter is obtained; based on the image registration parameter, transforming any coordinate values in said matrix to form a transformed matrix coordinates.

Processing binarazation of the image to transform into a corresponding matrix ⟋ S10

↓

Analyzing features in each of a plurality of adjacent parallel lines to obtain character matrix values in said matrix ⟋ S20

↓

Segmenting the image based on the character matrix values in said matrix to form character subblocks ⟋ S30

↓

Segmenting the remaining image to get character information in said character subblocks and recognizing character information ⟋ S40

FIG. 1

Setting a character in said matrix for a first pixel; setting a background in said matrix for a second pixel; collecting the second pixels in each row to form an array    ⌒S201

Obtaining a row subscript when a number in the array is bigger than a preset reference value, obtaining a plurality of rows of numbers in the array bigger than a preset reference value if the plurality of rows meet a preset condition, in which a distance between every two of the row subscripts in a plurality of rows is a row width parameter.    ⌒S202

⌒S203

Obtaining a column width parameter based on the row width parameter of the array and obtains a character size parameter based on the column width parameter and the row width parameter.

FIG. 2

Processing binarazation of the image to transform into a corresponding matrix ⌐S10

By the image registration function in the matrix lab, selecting several pairs of matching points between the image and preset reference image, and registering of the image based on several pairs of matching points, then the image registration parameter is obtained; based on the image registration parameter, transforming any coordinate values in said matrix into a transformed matrix coordinate ⌐S50

Analyzing features in each of a plurality of adjacent parallel lines to obtain character matrix values in said matrix ⌐S20

Segmenting the image based on the character matrix values in said matrix to form character subblocks ⌐S30

Segmenting the remaining image to get character information in said character subblocks and recognizing character information ⌐S40

FIG. 3

Apparutus for recognizing
characters in an image

Binary module — 01

Analysis module — 02

Segmentation module — 03

Recognition module — 04

FIG. 4

02

Analysis module

Array obtaining unit —021

Row width parameter obtaining unit —022

Character size parameter obtaining unit —023

FIG. 5

Apparatus for recognizing
characters in an image

—01

Binary module

—05

Registration module

—02

Analysis module

—03

Segmentation module

—04

Recognition module

FIG. 6

# INTERNATIONAL SEARCH REPORT

| International application No. |
|---|
| **PCT/CN2014/093767** |

**A. CLASSIFICATION OF SUBJECT MATTER**

G06K 9/20 (2006.01) i

According to International Patent Classification (IPC) or to both national classification and IPC

**B. FIELDS SEARCHED**

Minimum documentation searched (classification system followed by classification symbols)

G06K; G06F; G06T

Documentation searched other than minimum documentation to the extent that such documents are included in the fields searched

Electronic data base consulted during the international search (name of data base and, where practicable, search terms used)

CNABS, DWPI: image, document, character, identify, binaryzation, line, width, high, size, area, matrix, block, divide, partition, blank, space, clustering, matching

**C. DOCUMENTS CONSIDERED TO BE RELEVANT**

| Category* | Citation of document, with indication, where appropriate, of the relevant passages | Relevant to claim No. |
|---|---|---|
| X | CN 103413271 A (XI'AN JIAOTONG UNIVERSITY), 27 November 2013 (27.11.2013), description, paragraphs 30-45, and figures 1-4 | 1-2, 5-12, 15-20 |
| A | CN 103455814 A (CANON INC.), 18 December 2013 (18.12.2013), the whole document | 1-20 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 July 2015 (21.07.2015) | **29 July 2015 (29.07.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Yuan** Telephone No.: (86-10) **62089533** |
|---|---|

Form PCT/ISA/210 (second sheet) (July 2009)

## INTERNATIONAL SEARCH REPORT
### Information on patent family members

| | International application No. |
|---|---|
| | **PCT/CN2014/093767** |

| Patent Documents referred in the Report | Publication Date | Patent Family | Publication Date |
|---|---|---|---|
| CN 103413271 A | 27 November 2013 | None | |
| CN 103455814 A | 18 December 2013 | None | |

Form PCT/ISA/210 (patent family annex) (July 2009)